# EUROPEAN PATENT SPECIFICATION

(11) **EP 1 749 601 B1**
(45) Date of publication and mention of the grant of the patent: **23.04.2008**
(21) Application number: 06445050.5
(22) Date of filing: 20.06.2006
(51) Int. Cl.: B22F 7/00, B22F 7/06, C22C 29/08

(54) **Method of making a submicron cemented carbide powder mixture with low compacting pressure**
Verfahren zur Herstellung eines zementierten Carbidpulvers bei niedrigem Druck
Procédé de préparation de poudre de carbure cémenté à basse pression

(30) Priority: 29.07.2005 SE 0501746
(43) Date of publication of application: 07.02.2007
(73) Proprietor: Sandvik Intellectual Property AB, 811 81 Sandviken (SE)
(72) Inventor: Alm, Ove, SE-129 44 Hägersten (SE); Norgren, Susanne, SE-141 41 Huddinge (SE); Grearson, Alistair, Coventry, CV3 6HW, West Midlands (GB)
(74) Representative: Taquist, Henrik Lennart Emanuel

(56) References cited:
- EP-A- 0 543 375
- EP-A1- 0 963 454
- EP-A2- 1 043 413
- WO-A-98/18973
- US-A- 3 859 056

## Description

The present invention relates to a method of making fine grained in particular submicron and nano sized cemented carbide powders with low compaction pressure and the powder obtained.

Cemented carbide is made by wet milling of powders forming hard constituents, powders forming binder phase and pressing agents generally PEG (Polyethylene glycol) to a slurry, drying the slurry generally by spray drying, tool pressing the dried powder to bodies of desired shape and finally sintering. During sintering the bodies shrink about 16-20 % linearly. The shrinkage depends on pressing pressure, WC grain size, grain size distribution and Co-content. Pressing tools are expensive to make and are therefore made for a standard linear shrinkage such as 18 %. The correct shrinkage is obtained by applying a particular pressing pressure to a certain amount of powder. It is extremely important that the sintered body has a size and shape as close as possible to the desired one in order to avoid expensive post sintering operations such as grinding. However, if the grain size is fine, for example submicron or finer, a higher pressing pressure is needed to obtain a green density that gives the necessary shrinkage. A high pressing pressure is not desirable because of the risk of obtaining pressing cracks in the pressed bodies and an abnormal wear of the compacting tools and even a risk of tool failure and injuries to the operators. Moreover dimensional control of the whole sintered part is facilitated if the pressing pressure is kept within a certain interval.

A method of lowering the compacting pressure for submicron cemented carbide is disclosed in EP-A-1043413. The described method comprises premixing all components except WC for about three hours, adding the WC powder and then finally milling for about ten hours.

A common pressing agent in iron powder metallurgy is Zn-stearate.

It is an object of the present invention to provide methods of reducing the pressing pressure when making fine grained cemented carbides.

It has now surprisingly been found that a submicron cemented carbide powder with a reduced compacting pressure at a predetermined weighing in for 18 % linear shrinkage can be obtained if a mixture of PEG and a fatty acid compound comprising a blend of salts of higher molecular weight mostly unsaturated fatty acids is used as pressing agent in combination with pre-milling of the hard constituents, preferably in the dry state.

The method of the present invention can be applied to all kinds of cemented carbides comprising WC and/or other carbides and 2 - 20 wt-% Co, preferably 5 - 15 wt-% Co. It is particularly useful for submicron cemented carbide with an average grain size in the range 0.2 - 1.2 µm, preferably 0.3 - 1.0 µm, with essentially no WC grains >1.5 µm and containing grain growth inhibitors in particular <1 wt-% Cr and/or <1 wt-% V.

The present invention thus relates to a method of making a ready to press cemented carbide powder suitable for the production of submicron cemented carbide by means of powder metallurgical techniques wet milling, pressing and sintering. The wet milling is performed, e.g., in ethanol of powders of WC, possibly also other hard constituents, and binder metal, possibly carbon black or tungsten powder, and a pressing agent, respectively. The method comprises using 1 - 3 wt-% pressing agent comprising <90 wt-% PEG and 10 - 75 wt-%, preferably 25 - 50 wt-%, of blends of high molecular weight (C12 - <C20) saturated or unsaturated fatty acids, or salts thereof containing at least one element of Al, Ba, Ca, Co, Cr, Mg, N, Na, V, Zn, preferably Co, Cr, N, V or Zn dried, preferably by spray drying, compacted to bodies of desired shape and sintered to dense, homogenous, high performance cemented carbide inserts.

In a preferred embodiment of the present invention the milling procedure is started with a pre-milling step in which the powders forming the hard constituents are dry milled between 2 and 45 hours using ball mills with cemented carbide milling bodies or other suitable dry milling techniques. The required dry milling time depends on the size of the mill, the powder grain size, and the desired final pressing pressure or shrinkage and can readily be determined by the skilled artisan. The pre-milling step is followed by the final wet milling step described above.

The present invention also relates to a ready to press powder for making cemented carbide with low compaction pressure. The powder contains 1 - 3 wt-% of a pressing agent of the following composition, <90 wt-% PEG and 10 - 75 wt-%, preferably 25 - 50 wt-%, of blends of high molecular weight (C12 - <C20) saturated or unsaturated fatty acids, or salts thereof containing at least one element of Al, Ba, Ca, Co, Cr, Mg, N, Na, V, Zn, preferably Co, Cr, N, V or Zn. In a preferred embodiment, the grain size of the powder is submicron.

### Example 1

A submicron cemented carbide powder mixture with the composition WC with an average grain size of 0.8 µm - 0.3 wt-% Cr - 6 wt-% Co was produced according to the invention. The milling was carried out in ethanol (0.3 1 fluid per kg cemented carbide powder) in a 2.5 1 laboratory mill with 8 kg milling bodies and the batch size was 2 kg. The following pressing agents were used:
1A - PEG 40 g (prior art)
1B - PEG 28 g and 12 g of a blend of zinc salts of higher molecular weight, mostly unsaturated fatty acids

After spray drying, inserts of SNUN120408 were compacted and sintered according to standard practice. During the pressing operation, the compaction pressure was recorded with the following results, average of six inserts:

| Sample | Compaction pressure, MPa |
|---|---|
| 1A | 155 |
| 1B | 77 |

### Example 2

Example 1 was repeated using a WC-powder that had been dry pre-milled in a small 2.5 1 laboratory ball mill with 8 kg milling bodies and 2.0 kg WC powder for 12 h. The following pressing pressures were obtained:

| Sample | Compaction pressure, MPa |
|---|---|
| 2A | 130 |
| 2B | 47 |

The sintered inserts of these two examples were subjected to routine metallurgical inspection. Dense sintered structures were obtained and no signs of porosity or pressing cracks were found. The recorded pressing pressure was, however, much lower for the samples in Example 2 than for those in Example 1. Furthermore, it was found that the pressing pressures for samples 1B and 2B were a great deal lower than for the corresponding samples, 1A and 2A containing only PEG as pressing agent. These findings are definitely advantageous to pressing tool life.

### Example 3

A submicron cemented carbide powder mixture with the composition WC with an average grain size of 0.3 µm - 0.5 wt-% Cr - 10 wt-% Co was produced according to the invention. The milling was carried out in ethanol (0.3 1 fluid per kg cemented carbide powder) in a 2.5 1 laboratory mill with 8 kg milling bodies and the batch size was 2 kg. The following pressing agents were used:
3A - PEG 40 g (prior art)
3B - PEG 25 g and 15 g of a blend of zinc salts of higher molecular weight, mostly unsaturated fatty acids
3C - PEG 25 g and 15 g Co-stearate
3D - PEG 28 g and 12 g oleic acid

After spray drying, inserts of SNUN120408 were compacted and sintered according to standard practice. During the pressing operation the compaction pressure was recorded with the following results at a relative green density of 0.55, average of six inserts:

| Sample | Compaction pressure, MPa |
|---|---|
| 3A | 550 |
| 3B | 450 |
| 3C | 490 |
| 3D | 460 |

The sintered inserts were subjected to routine metallurgical inspection. Dense sintered structures were obtained with no signs of pressing cracks or larger pores were found except for sample 3A.

### Example 4

Example 3 was repeated using a WC-powder that had been dry pre-milled in a small 2.5 1 laboratory ball mill with 8 kg milling bodies and 2.0 kg WC powder for 35 h. The following pressing pressures were obtained when compacted to a relative green density of 0.55:

| Sample | Compaction pressure, MPa |
|---|---|
| 4A | 195 |
| 4B | 120 |
| 4C | 140 |
| 4D | 130 |

The sintered inserts were subjected to routine metallurgical inspection. Dense sintered structures were obtained and no signs of larger pores or pressing cracks were found in 4A - 4D. The recorded pressing pressures were, however, much less for the samples in Example 4 than those in Example 3. We also found that the pressing pressures for samples 4B - 4D were significantly lower than the pressure obtained for sample 4A, which contains only PEG as pressing agent. These findings are of course important in minimizing the wear of the pressing tools and the risk of tool failure.

## Claims

1. Method of making a ready to press submicron cemented carbide powder suitable for the production of submicron cemented carbide by means of powder metallurgical techniques milling, pressing and sintering including wet milling, e.g., in ethanol of powders of WC, optionally also other hard constituents, and binder metal, optionally carbon black or tungsten powder, and a pressing agent
**characterised in** using 1 - 3 wt-% pressing agent of the following composition, <90 wt-% PEG and 10 - 75 wt-%, preferably 25 - 50 wt-%, of blends of high molecular weight (C12 - <C20) saturated or unsaturated fatty acids, or salts thereof containing at least one element of Al, Ba, Ca, Co, Cr, Mg, N, Na, V, Zn, preferably Co, Cr, N, V or Zn.

2. Method according to any of the preceding claims
**characterised in** a dry pre-milling of the hard constituents mainly WC-powder for about 2-45 hours in ball mills with cemented carbide milling bodies or using other suitable dry milling techniques prior to a wet milling step.

3. Ready to press powder for making a submicron cemented carbide with low compaction pressure **characterised in** containing 1 - 3 wt-% of a pressing agent with the following composition, <90 wt-% PEG and 10 - 75 wt-%, preferably 25 - 50 wt-%, of blends of high molecular weight (C12 - <C20) saturated or unsaturated fatty acids, or salts thereof containing at least one element of Al, Ba, Ca, Co, Cr, Mg, N, Na, V, Zn, preferably Co, Cr, N, V or Zn.

## Patentansprüche

1. Verfahren zum Herstellen eines preßbereiten Hartmetallpulvers von Submikrometergröße, welches für die Herstellung von Hartmetall von Submikrometergröße durch die pulvermetallurgischen Techniken Mahlen, Pressen und Sintern, einschließlich Naßmahlen, z.B. in Ethanol, von Pulvern von WC, optional auch weiteren Hartbestandteilen und Bindermetall, optional Ruß oder Wolframpulver, und eines Preßmittels geeignet ist,
**gekennzeichnet durch** die Verwendung von 1-3 Gew.-% eines Preßmittels mit der folgenden Zusammensetzung: < 90 Gew.-% PEG und 10-75 Gew.-%, vorzugsweise 25-50 Gew.-%, von Gemischen von gesättigten oder ungesättigten Fettsäuren mit hohem Molekulargewicht (C12 - < C20) oder Salzen davon, die wenigstens ein Element von Al, Ba, Ca, Co, Cr, Mg, N, Na, V, Zn, vorzugsweise Co, Cr, N, V oder Zn, enthalten.

2. Verfahren nach einem der vorangegangenen Ansprüche, **gekennzeichnet durch** trockenes Vormahlen der Hartbestandteile, hauptsächlich WC-Pulver, für etwa 2-45 Stunden in Kugelmühlen mit Hartmetall-Mahlkörpern oder unter Verwendung anderer geeigneter Trockenmahltechniken vor einer Stufe des Naßmahlens.

3. Preßbereites Pulver zum Herstellen eines Hartmetalls von Submikrometergröße mit niedrigem Kompaktierungsdruck, **dadurch gekennzeichnet, daß** es 1-3 Gew.-% eines Preßmittels mit der folgenden Zusammensetzung enthält: < 90 Gew.-% PEG und 10-75 Gew.-%, vorzugsweise 25-50 Gew.-% von Gemischen von gesättigten oder ungesättigten Fettsäuren mit hohem Molekulargewicht (C12 - < C20) oder Salzen davon, die wenigstens ein Element von Al, Ba, Ca, Co, Cr, Mg, N, Na, V, Zn, vorzugsweise Co, Cr, N, V oder Zn, enthalten.

## Revendications

1. Procédé de fabrication d'une poudre de carbure cémenté submicronique prête à presser, appropriée pour la production de carbure cémenté submicronique au moyen de techniques de la métallurgie des poudres consistant à broyer, presser et fritter, y compris un broyage humide, par exemple dans de l'éthanol, des poudres de CW, optionnellement également d'autres constituants durs, et un métal de liaison, optionnellement du noir de carbone ou de la poudre de tungstène, et un agent de pressage
**caractérisé par** l'utilisation de 1 à 3 % en poids d'agent de pressage présentant la composition suivante, moins de 90 % en poids de PEG et de 10 à 75 % en poids, de préférence de 25 à 50 % en poids, de mélanges d'acides gras saturés ou non saturés à poids moléculaire élevé (de C12 à moins de C20) ou de sels de ceux-ci contenant au moins un élément parmi Al, Ba, Ca, Co, Cr, Mg, N, Na, V, Zn, de préférence Co, Cr, N, V ou Zn.

2. Procédé selon la revendication précédente, **caractérisé par** un prébroyage à sec des constituants durs, principalement de la poudre de CW pendant environ 2 à 45 heures dans des broyeurs à boulets comportant des corps de broyage en carbure cémenté ou en utilisant d'autres techniques de broyage à sec appropriées avant une étape de broyage humide.

3. Poudre prête à presser pour la fabrication d'un carbure cémenté submicronique avec une faible pression de compactage, **caractérisée par** le fait de contenir de 1 à 3 % en poids d'un agent de pressage ayant la composition suivante, moins de 90 % en poids de PEG et de 10 à 75 % en poids, de préférence de 25 à 50 % en poids de mélanges d'acides gras saturés ou non saturés à poids moléculaire élevé (de C12 à moins de C20) ou de sels de ceux-ci contenant au moins un élément parmi Al, Ba, Ca, Co, Cr, Mg, N, Na, V, Zn, de préférence Co, Cr, N, V ou Zn.
